# EUROPÄISCHE PATENTSCHRIFT

(11) **EP 2 415 508 B1**
(45) Veröffentlichungstag und Bekanntmachung des Hinweises auf die Patenterteilung: **09.11.2016**
(21) Anmeldenummer: 11174302.7
(22) Anmeldetag: 18.07.2011
(51) Int. Cl.: B01D 29/96, B01D 36/00, F02M 37/22, B01D 29/21

(54) **FLUIDFILTER**
FLUID FILTER
FILTRE À FLUIDE

(30) Priorität: 05.08.2010 DE 102010033508
(43) Veröffentlichungstag der Anmeldung: 08.02.2012
(73) Patentinhaber: Mahle International GmbH, 70376 Stuttgart (DE)
(72) Erfinder: Hoffmann, Dierk, 70569 Stuttgart (DE); Häußermann, Uli, 70734 Fellbach (DE)
(74) Vertreter: BRP Renaud & Partner mbB Rechtsanwälte Patentanwälte Steuerberater

(56) Entgegenhaltungen:
- DE-A1- 10 029 539
- DE-A1- 10 309 442
- DE-A1- 19 711 531
- US-A- 4 692 245
- US-A- 6 139 738
- US-A1- 2007 079 813

## Beschreibung

Die vorliegende Erfindung betrifft ein Fluidfilter, insbesondere ein Kraftstofffilter, mit einem radial von außen nach innen durchströmten Ringfilterelement gemäß dem Oberbegriff des Anspruchs 1.

Aus der EP 1 388 360 B1 ist ein gattungsgemäßes Fluidfilter mit einem durch einen Topf und einen Deckel gebildeten Gehäuse bekannt, in welchem ein radial von außen nach innen durchströmtes Ringfilterelement angeordnet ist. Dieses Ringfilterelement weist eine obere und eine untere Endscheibe auf und trennt in bekannter Weise einen außenliegenden Rohraum von einem innenliegenden Reinraum.

Weitere gattungsgemäße Filter sind beispielsweise aus den Druckschriften US 6 139 738, US 4 692 245 und DE 100 29 539 bekannt.

Die vorliegende Erfindung beschäftigt sich mit dem Problem, für ein Fluidfilter der gattungsgemäßen Art eine verbesserte Ausführungsform anzugeben, die insbesondere eine hohe Funktionssicherheit aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, in einem Fluidfilter, beispielsweise in einem Kraftstofffilter, einen Filterelementträger anzuordnen, der eine in Richtung eines einzusetzenden Ringfilterelementes zugewandte erste Dichtkontur aufweist. Generell weist das Fluidfilter ein durch einen Topf und einen Deckel gebildetes Gehäuse auf, in welchem das radial von außen nach innen durchströmte Ringfilterelement angeordnet ist. Das Ringfilterelement weist dabei in bekannter Weise eine obere und eine untere Endscheibe auf. Der Deckel des Gehäuses besitzt eine dem Ringfilterelement zugewandte zweite Dichtkontur, wobei das einzusetzende Ringfilterelement lediglich dann dicht einsetzbar ist, sofern dessen untere Endscheibe eine zur ersten Dichtkontur komplementär ausgebildete erste Gegenkontur und dessen obere Endscheibe eine zur zweiten Dichtkontur komplementär ausgebildete zweite Gegenkontur aufweist. Die psychologische Hürde zum Einsetzen anderer, insbesondere nicht autorisierter, Ringfilterelemente, welche beispielsweise zu einer Funktionsstörung des erfindungsgemäßen Fluidfilters führen könnten, kann damit deutlich erhöht werden, da der Benutzer stets mit Schäden rechnen muss. Dies gilt auch beim Einsetzen kleinerer Elemente. Hierdurch lässt sich insbesondere die Funktionssicherheit des erfindungsgemäßen Fluidfilters deutlich erhöhen, da die Verwendung nicht autorisierter Ringfilterelemente, also Ringfilterelemente, die eine entsprechende Dichtkontur bzw. Gegenkontur nicht aufweisen, zuverlässig ausgeschlossen werden kann.

Bei einer vorteilhaften Weiterbildung der erfindungsgemäßen Lösung, sind die erste Dichtkontur am Filterelementträger als in Axialrichtung rohrförmig abstehender Ring und die erste Gegenkontur als komplementär dazu an der unteren Endscheibe des Ringfilterelementes ausgebildete Nut ausgebildet. Der rohrförmig abstehende Ring bzw. Kragen der ersten Dichtkontur greift dabei bei eingesetztem Ringfilterelement in die endscheibenseitige Nut ein und gewährleistet dadurch eine dichte Trennung zwischen Roh- und Reinraum. Selbstverständlich kann der rohrförmig abstehende Ring auch an der unteren Endscheibe und die dazu gehörende und als komplementär dazu ausgebildete Nut am Filterelementträger angeordnet sein. Wichtig ist dabei lediglich, dass die erste Dichtkontur und die erste Gegenkontur derart aufeinander abgestimmt sind, dass diese bei in den Topf eingesetztem Ringfilterelement den Rohraum gegenüber dem Reinraum abdichten. Denkbar ist selbstverständlich auch, dass zur Erhöhung der Dichtfunktion beispielsweise zwischen der ersten Dichtkontur und der zugehörigen ersten Gegenkontur ein Federring eingelegt wird. Die erste und die zweite Dichtkontur können dabei selbstverständlich gleich oder aber auch unterschiedlich ausgebildet sein, so dass beispielsweise die obere und untere Endscheibe des erfindungsgemäßen Ringfilterelementes als Gleichteile ausgebildet werden können. Bei einer unterschiedlichen Ausbildung kann zudem eine Poka-Yoke-Funktion realisiert werden, die einen Falscheinbau des Ringfilterelements unterbindet.

Zweckmäßig weist der Filterelementträger angeformte Versteifungsrippen auf. Der Filterelementträger kann beispielsweise als einstückiges Kunststoffspritzgussteil ausgebildet sein und dadurch kostengünstig und präzise hergestellt werden. Die Versteifungsrippen, die sich beispielsweise nach radial innen verjüngend vom Außenumfang des Filterelementträgers nach innen erstrecken, sind dabei in der Art von Unterzügen ausgebildet und bewirken mit dem axial abstehenden, ringförmigen Kragen eine Erhöhung der Steifigkeit erheblich. Diese Steifigkeit ist erforderlich, da zur Erzielung einer gewünschten Dichtwirkung das Ringfilterelement über seine untere Endscheibe mit einer vordefinierten Kraft gegen den Filterelementträger vorgespannt werden muss. Da das erfindungsgemäße Fluidfilter üblicherweise druckseitig angeordnet ist, muss die vordefinierte Anpresskraft des Ringfilterelementes gegen den Filterelementträger dem Betriebsdruck entgegen wirken, und beispielsweise ein durch den Betriebsdruck im Fluidfilter hervorgerufenes Abheben des Ringfilterelementes vom Filterelementträger verhindern. An einer der Wand des Topfes zugewandten Seite kann der Filterelementträger eine Umfangsnut aufweisen, in welche eine O-Ringdichtung zur Abdichtung gegenüber der Wand des Gehäuses des Fluidfilters eingelegt ist.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

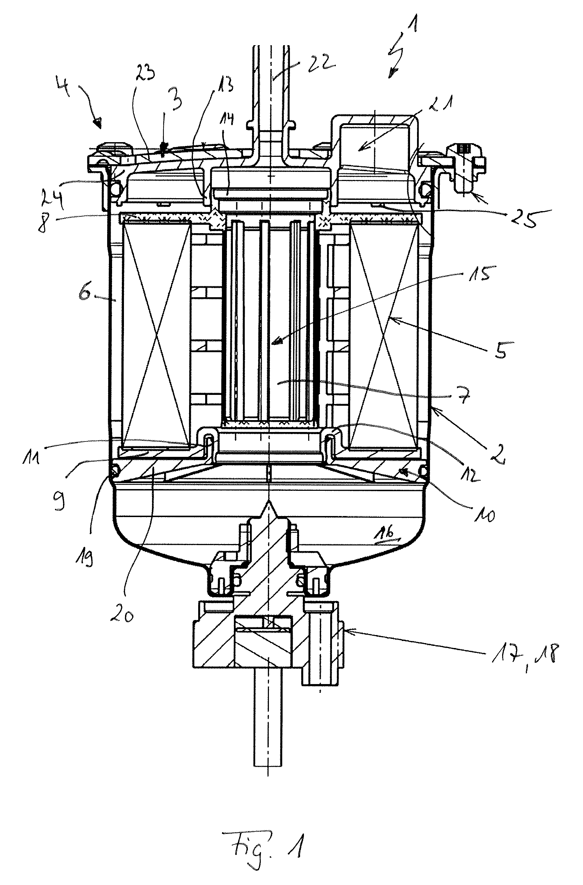

Die einzige Fig. 1 zeigt eine Querschnittsdarstellung eines erfindungsgemäßen Fluidfilters.

Entsprechend der Fig. 1, weist ein erfindungsgemäßes Fluidfilter 1, das insbesondere als Kraftstofffilter ausgebildet sein kann, ein durch einen Topf 2 und einen zugehörigen Deckel 3 gebildetes Gehäuse 4 auf. Der Deckel 3 ist dabei mit dem Topf 2 verschraubt, um einen innerhalb des Fluidfilters 1 beim Betrieb herrschenden Betriebsdruck aufnehmen zu können. Selbstverständlich ist auch eine andere Befestigung des Deckels 3 am Topf 2, wie beispielsweise eine Verbördelung, denkbar. Innerhalb des Gehäuses 4 ist ein von radial außen nach innen durchströmtes Ringfilterelement 5 angeordnet, das einen außenliegenden Rohraum 6 von einem innenliegenden Reinraum 7 trennt. Des Weiteren weist das Ringfilterelement 5 eine obere Endscheibe 8 sowie eine untere Endscheibe 9 auf. Erfindungswesentlich ist nun, dass im Topf 2 des Filtergehäuses 4 ein Filterelementträger 10 angeordnet ist, der gegenüber einer Wand des Topfes 2 abgedichtet ist und eine dem Ringfilterelement 5 zugewandte erste Dichtkontur 11 besitzt. Diese erste Dichtkontur 11 ist dabei als in Axialrichtung rohrförmig abstehender Ring ausgebildet. Die untere Endscheibe 9 des Ringfilterelementes 5 weist eine zur ersten Dichtkontur 11 komplementär ausgebildete erste Gegenkontur 12 auf, die als Nut ausgeformt ist. Der Deckel 3 besteht prinzipiell aus einem Außenteil 23 und einem Innenteil 24.

Das Filtergehäuse 4 besteht vorzugsweise aus Metall oder aus Kunststoff. Somit ist das Außenteil 23 des Deckels 3 aus Metall und das Innenteil 24 aus Kunststoff. Der Deckel 3 weist darüber hinaus eine dem Ringfilterelement 5 zugewandte zweite Dichtkontur 13 auf, wogegen die obere Endscheibe 8 des Ringfilterelementes 5 eine zu dieser zweiten Dichtkontur 13 komplementär ausgebildete zweite Gegenkontur 14 besitzt. Eine Verschraubung des Deckels 3 mit dem Topf 2 erfolgt dabei über das Außenteil 23. Die zweite Gegenkontur 14 kann dabei beispielsweise als Dichtlippe ausgebildet sein, die sich unter Betriebsdruck des Fluidfilters 1 dicht an die zweite Dichtkontur 13 des Innenteils 24 des Deckels 3 anlegt. Mit den erfindungsgemäß ausgebildeten Dichtkonturen 11 und 13 sowie den zugehörigen Gegenkonturen 12 und 14 kann das Fluidfilter 1 lediglich dann funktionssicher betrieben werden, wenn ein Ringfilterelement 5 mit exakt den erforderlichen Gegenkonturen 12 und 14 verwendet wird. Die Verwendung anderer, insbesondere nicht autorisierter Ringfilterelemente, welche beispielsweise zu einem fehlerhaften Filtrationsprozess und damit beispielsweise zu Schäden führen könnten, kann dadurch mit hoher Wahrscheinlichkeit ausgeschlossen werden, da der Benutzer stets Funktionsstörungen mit unvorhersehbaren Auswirkungen fürchten muss. Am Innenteil 24 des Deckels 3 kann zusätzlich ein Heizer 25 angeordnet sein. Insbesondere bei nicht autorisierten Ringfilterelementen, die die erforderliche Dichtfunktion nicht aufweisen, kommt es zu einer Verbindung des Rohraums 6 mit dem Reinraum 7 unter Umgehung des Ringfilterelements und damit zu keiner Filtration.

Im Reinraum 7 ist darüber hinaus ein Endabscheider 15 zur Abscheidung von Wasser angeordnet. Dieser Endabscheider ist mit einem wasserabweisenden bzw. wasserabscheidenden Material belegt, wobei auch denkbar ist, dass auf einer Innenseite des Ringfilterelementes 5 eine Koaleszerschicht angeordnet ist, die beispielsweise ein feinmaschiges, dünnes, hydrophobes Netz, insbesondere aus Metall oder aus Kunststoff oder aus mit Kunststoff beschichtetem Metall aufweist. Das am Endabscheider 15 abgeschiedene Wasser gelangt aufgrund seiner Schwerkraft in einen unterhalb des Ringfilterelementes 5 und insbesondere unterhalb des Endabscheiders 15 angeordneten Wassersammelraum 16. In den Wassersammelraum 16 von unten hineinragend kann darüber hinaus ein Wasserstandssensor 17 bzw. eine Wasserablasseinrichtung 18 angeordnet sein. Bei Erreichen eines vordefinierten Pegels an Wasser im Wassersammelraum 16 sendet somit der Wasserstandssensor 17 ein entsprechendes Signal aus und/oder lässt über die Wasserablasseinrichtung 18 das abgeschiedene Wasser ab.

Betrachtet man den Filterelementträger 10, so kann man erkennen, dass dieser über eine O-Ringdichtung 19 gegenüber der Wand des Topfes 2 abgedichtet ist und zudem angeformte Versteifungsrippen 20 aufweist. Diese Versteifungsrippen 20 sind erforderlich, um einerseits die Dichtwirkung zwischen der entsprechenden Dichtkontur 11 und der zugehörigen Gegenkontur 12 zu erreichen und andererseits ein Herausziehen des Filterelementträgers 10 bei der Demontage des Ringfilterelements 5 zuverlässig ausschließen zu können. Die Versteifungsrippen 20 können dabei einstückig mit dem Filterelementträger 10 ausgebildet sein, sofern letzterer beispielsweise als Kunststoffspritzgussteil hergestellt wird. Betrachtet man die Fig. 1 weiter, so kann man erkennen, dass im Deckel 3 sowohl ein Zulauf 21 als auch ein Ablauf 22 angeordnet sind. Insgesamt lässt sich mit dem erfindungsgemäßen Fluidfilter 1, welches insbesondere auch im Nutzfahrzeugbau zum Einsatz kommt, eine hohe Funktionssicherheit gewährleisten, da ausschließlich die Verwendung autorisierter Ringfilterelemente 5 möglich ist.

## Patentansprüche

1. Fluidfilter (1), insbesondere ein Kraftstofffilter, mit einem durch einen Topf (2) und einen Deckel (3) gebildeten Gehäuse (4), in welchem ein radial von außen nach innen durchströmtes Ringfilterelement (5) angeordnet ist, das einen außen liegenden Rohraum (6) von einem innen liegenden Reinraum (7) trennt und das eine obere und eine untere Endscheibe (8,9) aufweist, wobei
- im Topf (2) ein Filterelementträger (10) angeordnet ist, der gegenüber einer Wand des Topfes (2) abgedichtet ist und eine dem Ringfilterelement (5) zugewandte erste Dichtkontur (11) aufweist,
- die untere Endscheibe (9) des Ringfilterelements (5) eine zur ersten Dichtkontur (11) komplementär ausgebildete erste Gegenkontur (12) aufweist,
- der Deckel (3), insbesondere ein Innenteil (24) desselben, eine dem Ringfilterelement (5) zugewandte zweite Dichtkontur (13) und die obere Endscheibe (8) des Ringfilterelements (5) eine zur zweiten Dichtkontur (13) komplementär ausgebildete zweite Gegenkontur (14) aufweist,
- unterhalb des Filterelementträgers (10) ein Wassersammelraum (16) angeordnet ist,
- die erste Dichtkontur (11) als in Axialrichtung rohrförmig abstehender Ring und die erste Gegenkontur (12) als komplementär dazu ausgebildete Nut ausgebildet sind,
- im Reinraum (7) ein Endabscheider (15) mit einem wasserabweisenden/- abscheidenden Material angeordnet ist,
**dadurch gekennzeichnet,**
**dass** der Deckel (3) aus einem Außenteil (23) aus Metall und einem Innenteil (24) aus Kunststoff ausgebildet ist.

2. Fluidfilter nach Anspruch 1,
**dadurch gekennzeichnet,**
**dass** der Filterelementträger (10) über eine O-Ringdichtung (19) gegenüber der Wand des Topfes (2) abgedichtet ist.

3. Fluidfilter nach Anspruch 1 oder 2,
**dadurch gekennzeichnet,**
**dass** der Filterelementträger (10) angeformte Versteifungsrippen (20) aufweist.

4. Fluidfilter nach einem der Ansprüche 1 bis 3,
**dadurch gekennzeichnet,**
**dass** die zweite Gegenkontur (14) als Dichtlippe ausgebildet ist, die sich unter Betriebsdruck des Fluidfilters (1) dicht an die zweite Dichtkontur (13) anlegt.

5. Fluidfilter nach einem der Ansprüche 1 bis 4,
**dadurch gekennzeichnet,**
**dass** zwischen der jeweiligen Dichtkontur (11,13) und der zugehörigen Gegenkontur (12,14) ein Federring/Dichtring angeordnet ist.

6. Fluidfilter nach einem der Ansprüche 1 bis 5,
**dadurch gekennzeichnet,**
**dass** ein Zulauf (21) und ein Ablauf (22) im Deckel (3) des Fluidfilters (1) angeordnet sind.

7. Fluidfilter nach einem der Ansprüche 1 bis 6,
**dadurch gekennzeichnet,**
**dass** am Innenteil (24) des Deckels (3) ein Heizer (25) angeordnet ist.

## Claims

1. Fluid filter (1), in particular a fuel filter, with a housing (4) formed by a pot (2) and a lid (3) and in which is arranged a ring filter element (5) that is flowed through radially from outside to inside, that separates an outward-lying crude space (6) from an inward-lying clean space (7) and that has an upper and a lower end disc (8,9), wherein
- in the pot (2) is arranged a filter element carrier (10) that is sealed against a wall of the pot (2) and that has a first sealing contour (11) facing the ring filter element (5),
- the lower end disc (9) of the ring filter element (5) has a first counter-contour (12) formed complementarily to the first sealing contour (11),
- the lid (3), in particular an inner part (24) thereof, has a second sealing contour (13) facing the ring filter element (5) and the upper end disc (8) of the ring filter element (5) has a second counter-contour (14) formed complementarily to the second sealing contour (13),
- a water collection space (16) is arranged underneath the filter element carrier (10),
- the first sealing contour (11) is formed as a ring protruding tube-like in the axial direction and the first counter-contour (12) is formed as a groove formed complementarily thereto,
- in the clean space (7) is arranged an end separator (15) with a water repellent / - separating material,
**characterised in that**,
the lid (3) is formed of an outer part (23) of metal and an inner part (24) of plastic.

2. Fluid filter according to claim 1,
**characterised in that**,
the filter element carrier (10) is sealed against the wall of the pot (2) by an O-ring seal (19).

3. Fluid filter according to claim 1 or claim 2,
**characterised in that**,
the filter element carrier (10) has stiffening ribs (20) formed on it.

4. Fluid filter according to one of claims 1 to 3,
**characterised in that**,
the second counter-contour (14) is formed as a sealing lip that sealingly abuts the second sealing contour (13) under operating pressure of the fluid filter (1).

5. Fluid filter according to one of claims 1 to 4,
**characterised in that**,
a spring ring / sealing ring is arranged between the respective sealing contour (11,13) and the corresponding counter-contour (12,14).

6. Fluid filter according to one of claims 1 to 5,
**characterised in that**,
an inlet (21) and an outlet (22) are arranged in the lid (3) of the fluid filter (1).

7. Fluid filter according to one of claims 1 to 6,
**characterised in that**,
a heater (25) is arranged in the inner part (24) of the lid (3).

## Revendications

1. Filtre à fluide (1), en particulier filtre à carburant, avec un boîtier (4) formé par un pot (2) et un couvercle (3), dans lequel un élément filtrant annulaire (5) parcouru par un flux radial de l'extérieur vers l'intérieur est disposé, lequel sépare une chambre brute (6) située à l'extérieur d'une chambre blanche (7) située à l'intérieur et qui présente un disque d'extrémité supérieur et inférieur (8, 9), dans lequel
- un support d'élément filtrant (10) est disposé dans le pot (2), lequel est étanchéifié par rapport à une paroi du pot (2) et qui présente un premier contour d'étanchéité (11) tourné vers l'élément filtrant annulaire (5),
- le disque d'extrémité inférieur (9) de l'élément filtrant annulaire (5) présente un premier contre-contour (12) réalisé de manière complémentaire par rapport au premier contour d'étanchéité (11),
- le couvercle (3), en particulier une partie intérieure (24) de ce dernier, présente un deuxième contour d'étanchéité (13) tourné vers l'élément filtrant annulaire (5) et le disque d'extrémité supérieur (8) de l'élément filtrant annulaire (5) présente un deuxième contre-contour (14) réalisé de manière complémentaire par rapport au deuxième contour d'étanchéité (13),
- une chambre de collecte d'eau (16) est disposée sous le support d'élément filtrant (10),
- le premier contour d'étanchéité (11) est réalisé sous la forme d'un anneau dépassant dans une direction axiale de manière à présenter une forme tubulaire et le premier contre-contour (12) est réalisé sous la forme d'une rainure réalisée de manière complémentaire,
- un séparateur final (15) avec un matériau hydrofuge/se déposant est disposé dans la chambre blanche (7),
**caractérisé en ce**
**que** le couvercle (3) est réalisé à partir d'une partie extérieure (23) en métal et d'une partie intérieure (24) en plastique.

2. Filtre à fluide selon la revendication 1,
**caractérisé en ce**
**que** le support d'élément filtrant (10) est étanchéifié par l'intermédiaire d'un joint torique (19) par rapport à la paroi du pot (2).

3. Filtre à fluide selon la revendication 1 ou 2,
**caractérisé en ce**
**que** le support d'élément filtrant (10) présente des nervures de renforcement (20) moulées.

4. Filtre à fluide selon l'une quelconque des revendications 1 à 3,
**caractérisé en ce**
**que** le deuxième contre-contour (14) est réalisé sous la forme d'une lèvre étanche, qui prend appui de manière étanche contre le deuxième contour d'étanchéité (13) sous l'action d'une pression de fonctionnement du filtre à fluide (1).

5. Filtre à fluide selon l'une quelconque des revendications 1 à 4,
**caractérisé en ce**
**qu'**une rondelle-ressort/une bague d'étanchéité est disposée entre le contour d'étanchéité (11, 13) respectif et le contre-contour (12, 14) associé.

6. Filtre à fluide selon l'une quelconque des revendications 1 à 5,
**caractérisé en ce**
**qu'**une arrivée (21) et une évacuation (22) sont disposées dans le couvercle (3) du filtre à fluide (1).

7. Filtre à fluide selon l'une quelconque des revendications 1 à 6,
**caractérisé en ce**
**qu'**un chauffeur (25) est disposé au niveau de la partie intérieure (24) du couvercle (3).
